# EUROPÄISCHE PATENTSCHRIFT

(11) **EP 3 026 459 B1**
(45) Veröffentlichungstag und Bekanntmachung des Hinweises auf die Patenterteilung: **12.12.2018**
(21) Anmeldenummer: 15191383.7
(22) Anmeldetag: 26.10.2015
(51) Int. Cl.: G01S 17/87, G01S 17/93, G01S 17/42, G01S 17/89, G01S 7/481

(54) **SENSORSYSTEM**
SENSOR SYSTEM
SYSTEME DE CAPTEUR

(30) Priorität: 27.11.2014 DE 102014117399
(43) Veröffentlichungstag der Anmeldung: 01.06.2016
(73) Patentinhaber: SICK AG, 79183 Waldkirch/Breisgau (DE)
(72) Erfinder: Sigmund, Jörg, 79100 Freiburg (DE); Albert, Magnus, 79104 Freiburg (DE)
(74) Vertreter: Manitz Finsterwald Patentanwälte PartmbB

(56) Entgegenhaltungen:
- EP-A1- 2 555 014
- DE-A1-102008 007 451
- DE-U1-202010 012 985

## Beschreibung

Die vorliegende Erfindung betrifft ein Fahrzeug umfassend ein optisches Sensorsystem mit einem Abstandssensor, insbesondere einem Laserscanner, welcher Abstandsinformationen für einen ersten Überwachungsbereich ermittelt, wobei der erste Überwachungsbereich eine ebene Fläche definiert, die bevorzugt parallel zu einem Untergrund verläuft. Das optische Sensorsystem umfasst ferner eine Auswerteeinheit, die ausgebildet ist, anhand der Abstandsinformationen Objekte zu erkennen, und bei Erkennung eines Objekts ein Warnsignal auszugeben.

Solche optischen Sensorsysteme finden Verwendung in vielfältigen Anwendungen. Beispielsweise können sie stationär angebracht sein und zur Überwachung eines Schutzraumes einer gefahrenträchtigen Maschine dienen. Dabei können mittels des ersten Überwachungsbereichs, welcher insbesondere parallel zum Untergrund verläuft, z.B. die Beine von Personen detektiert werden. Wird auf diese Weise die Anwesenheit einer Person oder eines Gegenstandes im Schutzraum von dem Sensorsystem erkannt, so kann die Maschine abgeschaltet werden, um die Person nicht zu gefährden.

Außerdem können optische Sensorsysteme auch für mobile Anwendungen eingesetzt werden, insbesondere können sie einen Betrieb von Fahrzeugen und selbstfahrenden Fahrzeugen ermöglichen. Selbstfahrende Fahrzeuge, auch AGVs (Automated Guided Vehicle) genannt, werden z.B. zum automatischen Transport von Gegenständen, beispielsweise in automatisierten Fertigungsbetrieben, eingesetzt. Um eine Kollision mit Objekten (d.h. Hindernissen oder Personen) zu vermeiden, wird üblicherweise ein an dem Fahrzeug angebrachter Laserscanner des Sensorsystems verwendet, der in etwa 15 bis 30 cm Höhe über dem Untergrund angebracht ist und z.B. einen in Fahrtrichtung des Fahrzeugs ausgerichteten Überwachungsbereich abtastet. Der Laserscanner kann allgemein auch ein Abstandssensor sein, dessen Überwachungsbereich sich bevorzugt parallel zu dem Untergrund erstreckt und eine ebene Fläche definiert. Durch die zum Untergrund beabstandete Montage des Abstandssensors kann eine fälschliche Erfassung des Untergrunds als Hindernis während Nickbewegungen des Fahrzeugs beim Beschleunigen bzw. Bremsen oder beim Überfahren von Unebenheiten vermieden werden.

Durch die Anordnung des Abstandssensors werden sowohl bei stationärem, als auch bei einem mobilen Einsatz des Sensorsystems Hindernisse nicht erkannt, die niedriger als der Abstand des ersten Überwachungsbereichs bzw. des Abstandssensors von dem Untergrund sind. Bei einem Zusammenstoß z.B. eines selbstfahrenden Fahrzeugs mit solchen Hindernissen kann es zu Beschädigungen des Fahrzeugs und des Hindernisses kommen. Zudem kann insbesondere bei der Verwendung von selbstfahrenden Fahrzeugen in Krankenhäusern auch ein Verletzungsrisiko bestehen. Auch bei der stationären Verwendung des Sensorsystems kann eine nicht erfolgte Erkennung von Objekten zu Sicherheitsrisiken führen.

Aus der EP 2 555 014 A1 ist ein Fahrzeug mit einem optischen Sensorsystem gemäß dem Oberbegriff des Anspruchs 1 bekannt. Die DE 10 2008 007 451 A1 offenbart eine Beleuchtungseinrichtung, welche weiter entfernte Bereiche mit höherer Intensität bestrahlt. Die DE 20 2010 012 985 U1 betrifft eine Sensoranordnung zur Objekterkennung mit einem entfernungsmessenden Laserscanner und einem weiteren entfernungsmessenden optoelektronischen Sensor.

Es ist die der Erfindung zugrundeliegende Aufgabe, ein Fahrzeug mit einem optischen Sensorsystem anzugeben, wobei das Sensorsystem hinsichtlich seiner Fehleranfälligkeit verbessert ist.

Erfindungsgemäß wird diese Aufgabe durch ein Fahrzeug mit einem optischen Sensorsystem gemäß Anspruch 1 und insbesondere dadurch gelöst, dass das Sensorsystem zusätzlich eine Tiefenkamera umfasst, die ein dreidimensionales Bild eines zweiten Überwachungsbereichs erzeugt, und wobei die Auswerteeinheit ausgebildet ist, eine Referenzkontur an beschleunigungsabhängige Bewegungen des Fahrzeugs anzupassen. Hierzu übermittelt die Steuereinheit der Auswerteeinheit aktuelle Beschleunigungswerte, aufgrund derer die Auswerteeinheit die Referenzkontur jeweils anpasst. Alternativ greift die Auswerteeinheit auf Messwerte eines Beschleunigungssensors zurück.

Die Tiefenkamera ist bevorzugt eine TOF-Kamera (d.h. eine Time Of Flight-Kamera bzw. eine Kamera mit Lichtlaufzeitmessung) oder eine Stereo-Kamera. Eine solche zusätzliche Tiefenkamera kann deutlich kostengünstiger sein als beispielsweise die Verwendung eines Laserscanners mit einem dreidimensionalen Überwachungsbereich. Zudem können die von der Tiefenkamera erfassten dreidimensionalen Bilder schneller und einfacher verarbeitet werden, wodurch eine Erfassung flacher Hindernisse auf wirtschaftliche und damit kostengünstige Art und Weise ermöglicht wird.

Weiterhin ist von Vorteil, dass an die Tiefenkamera keine hohen Anforderungen zu stellen sind, beispielsweise muss die Tiefenkamera nicht in der Lage sein, auch eine Remission von weniger als 2 % zu detektieren, da derartige Vorgaben zum Personenschutz bereits durch den Abstandssensor erfüllt sein können.

Im Betrieb des Sensorsystems tastet der Abstandssensor einen linienförmigen Bereich ab und liefert für die abgetastete Linie Abstands- also Tiefeninformationen.

Bevorzugt "überschneiden" sich der erste Überwachungsbereich des Abstandssensors und der zweite Überwachungsbereich der Tiefenkamera, wodurch sich die Möglichkeit ergibt, die von Abstandssensor und Tiefenkamera erfassten Informationen miteinander zu kombinieren. Auf diese Weise ergibt sich zudem eine gewisse Redundanz der erfassten Informationen, die zur besseren Erkennung von Objekten ausgenutzt werden kann.

Der Abstandssensor und die Tiefenkamera übermitteln jeweils die Abstandsinformationen bzw. die erfassten dreidimensionalen Bilder an die Auswerteeinheit. Diese kann dann damit eine Hinderniserkennung durchführen. Die Auswerteeinheit kommuniziert beispielsweise mit einer Steuereinheit und überträgt an die Steuereinheit ein Warnsignal, falls ein Objekt oder Hindernis erkannt wurde. Die Steuereinheit kann dann auf das Warnsignal hin entsprechende Maßnahmen einleiten, z.B. den Stopp der Maschine bzw. des Fahrzeugs oder eine Warnung eines Benutzers durch optische oder akustische Signale. Grundsätzlich kann das Warnsignal derartige Aktionen auch direkt einleiten.

Im Vergleich zu einem alleinigen Einsatz des Abstandssensors werden durch die Kombination von Abstandssensor und Tiefenkamera zusätzliche Informationen über die Umgebung des optischen Sensorsystems erfasst, wodurch eine bessere Objekterkennung ermöglicht wird. Insbesondere können durch die Tiefenkamera auch Messwerte ober- und unterhalb der ebenen Fläche des ersten Überwachungsbereichs erfasst werden.

Der Abstandssensor und/oder die Tiefenkamera können eigensicher ausgebildet sein und sichere Kommunikationsschnittstellen aufweisen. Der Abstandssensor ist bevorzugt als Laserscanner mit einem drehbaren Scankopf ausgebildet, der Abstandsinformationen über eine Lichtlaufzeitmessung von von dem Abstandssensor selbst ausgesandten Laserimpulsen durchführt.

Zur zusätzlichen Erhöhung der Sicherheit kann die Auswerteeinheit zyklische Tests der Tiefenkamera durchführen.

Vorteilhafte Weiterbildungen der Erfindung sind in der Beschreibung, den Zeichnungen und den Unteransprüchen angegeben.

Gemäß einer ersten vorteilhaften Ausführungsform ist die Auswerteeinheit zur Auswertung der Abstandsinformation und der dreidimensionalen Bilder eine Recheneinrichtung des Abstandssensors. Dies bedeutet, die Datenverarbeitung von Abstandssensor und Tiefenkamera findet ganz oder teilweise im Abstandssensor statt. Dabei wird ausgenutzt, dass die Recheneinrichtung des Abstandssensors üblicherweise sehr leistungsfähig ist und als sichere bzw. eigensichere Komponente ausgebildet ist. Zudem ist es von Vorteil, dass die Tiefenkamera dann nur eine rudimentäre Steuerung benötigt, wodurch eine aufwändige und damit teure zusätzliche Datenverarbeitung in der Tiefenkamera entfallen kann. Die von der Tiefenkamera erzeugten dreidimensionalen Bilder können somit von der Recheneinrichtung des Abstandssensors verarbeitet werden. Die Recheneinrichtung des Abstandssensors kann dann zudem mit der Steuereinheit kommunizieren, um beispielsweise ein Warnsignal zu übermitteln.

Durch die gemeinsame Verarbeitung der Daten des Abstandssensors und der Tiefenkamera ist auch nur eine Datenschnittstelle von der Auswerteeinheit zu der Steuereinheit notwendig. Zudem kann eine einzige Konfiguration der Software des Abstandssensors für den Betrieb des Abstandssensors und der Tiefenkamera ausreichen.

Alternativ kann auch eine externe Auswerteeinheit vorgesehen sein, die insbesondere die Datenverarbeitung für den Abstandssensor und die Tiefenkamera vornimmt und mit der Steuereinheit kommuniziert.

Gemäß einer weiteren vorteilhaften Ausführungsform ist die Tiefenkamera auf den Untergrund ausgerichtet, wobei die Tiefenkamera bevorzugt den Untergrund unterhalb des ersten Überwachungsbereichs zumindest teilweise erfasst. Die Tiefenkamera und der Abstandssensor können beabstandet voneinander angeordnet sein, wobei die Tiefenkamera und der Abstandssensor "schräg" zueinander ausgerichtet sind. Dadurch können sich der erste Überwachungsbereich des Abstandssensors und der zweite Überwachungsbereich des Tiefensensors zumindest bereichsweise schneiden. Aufgrund der derartigen Ausrichtung der Tiefenkamera (z.B. schräg nach unten) kann die Tiefenkamera bei Verwendung in einem Fahrzeug dem in Fahrtrichtung vor dem selbstfahrenden Fahrzeug liegenden Untergrund erfassen und somit auch niedrige Hindernisse detektieren, die eine Kollisionsgefahr für das Fahrzeug darstellen.

Die Auswerteeinheit ist ausgebildet, dreidimensionale Bilder bzw. Bilddaten der Tiefenkamera zu empfangen und zu verarbeiten, wobei die Auswerteeinheit ausgebildet ist, die dreidimensionalen Bilder mit der Referenzkontur zu vergleichen und anhand des Vergleichs Hindernisse zu erkennen. Die Referenzkontur kann zu diesem Zweck in der Auswerteeinheit eingespeichert werden, wobei die Referenzkontur beispielsweise aus den relativen Befestigungspositionen des Abstandssensors und der Tiefenkamera berechnet werden kann. Alternativ kann die Referenzkontur unter Zuhilfenahme von Probekörpern eingelernt werden. Eine Veränderung der dreidimensionalen Bilder, welche nicht mit der Referenzkontur übereinstimmt, kann dann auf ein Objekt bzw. Hindernis hindeuten.

Die Auswerteeinheit ist ausgebildet, einen Untergrund als Referenzkontur zu verwenden. Der Untergrund eignet sich dabei besonders als Referenzkontur, da er üblicherweise eine plane, ebene Fläche ist.

Bevorzugt wird der von dem ersten Überwachungsbereich überdeckte Untergrund, d.h. der unterhalb des ersten Überwachungsbereichs liegende Untergrund, als Referenzkontur verwendet. Üblicherweise weist der Untergrund ein gutes Remissionsverhalten auf, wodurch zuverlässige Messwerte von der Tiefenkamera erfasst werden können.

Stellt die Tiefenkamera im Betrieb einen geringeren Abstandswert zu dem Untergrund in dem dreidimensionalen Bild fest, als dies gemäß der Referenzkontur der Fall sein müsste, so wird von der Auswerteeinheit eine Erhebung erkannt, die insbesondere ab einer vorbestimmten Höhe als Objekt bzw. Hindernis eingestuft wird. Im umgekehrten Fall eines im Vergleich zu der Referenzkontur vergrößerten Messwerts kann es sich beispielsweise um eine Treppenstufe oder ein Schlagloch handeln.

Bevorzugt wird der zweite Überwachungsbereich mittels einer, vorzugsweise modulierten, Lichtquelle beleuchtet. Die modulierte Lichtquelle ist dabei mit der Tiefenkamera gekoppelt, um eine Lichtlaufzeitmessung zu ermöglichen. Die Lichtquelle kann beabstandet von der Tiefenkamera angeordnet sein. Als Lichtquelle kann eine Leuchtdiode (LED) oder ein Laser verwendet werden. Die Modulationsfrequenz der Lichtquelle ist bevorzugt an den zu messenden Abstand, die gewünschte Auflösung und/oder die benötigte Bildwiederholrate angepasst. Beispielsweise eignet sich eine Modulationsfrequenz von 50 MHz für eine maximale Reichweite von 3 m.

Ebenfalls bevorzugt ist die Lichtquelle ausgebildet, von der Tiefenkamera weiter entfernte Bereiche des zweiten Überwachungsbereichs mit höherer Beleuchtungsintensität zu beleuchten. Mit steigendem Abstand zu der Tiefenkamera nimmt die Tiefenkamera den Untergrund unter einem flacheren Einfallswinkel wahr, wodurch die relative Helligkeit für die Tiefenkamera in diesem Bereich sinkt. Durch die Erhöhung der Beleuchtungsintensität in diesem Bereich wird ein Ausgleich für den größeren Abstand und den damit flacheren Einfallswinkel erzielt, wodurch sich Dynamikprobleme verhindern lassen und die Messgenauigkeit verbessert wird.

Beispielsweise kann ein parabelförmiger, d.h. quadratischer, Anstieg der Beleuchtungsintensität über den Abstand zur Lichtquelle bzw. den Abstand zum Fahrzeug mittels Strahlformung und/oder geänderter Ansteuerung der Lichtquelle erfolgen.

Gemäß einer weiteren vorteilhaften Ausführungsform ist die Tiefenkamera ausgebildet, nur solche Daten des dreidimensionalen Bilds an die Auswerteeinheit zu übertragen, die aus dem Bereich des ersten Überwachungsbereichs stammen. Beispielsweise kann der Blickwinkel der Tiefenkamera so groß sein, dass die Tiefenkamera einen über den ersten Überwachungsbereich seitlich hinausgehenden Raumbereich erfasst. In diesem Fall kann es ausreichend sein, nur Daten an die Auswerteeinheit zu übertragen, die aus dem begrenzten Raumbereich unter- oder oberhalb des ersten Überwachungsbereichs bzw. aus dem ersten Überwachungsbereich selbst stammen (also aus einem Raumbereich, der seitlich nicht über dem ersten Überwachungsbereich hinausragt). Dieser begrenzte Raumbereich kann als Überschneidungsbereich bezeichnet werden.

Dadurch entsteht eine Datenreduktion in der Tiefenkamera, d.h. das dreidimensionale Bild kann beschnitten werden. In der Folge führt dies zu einer Entlastung der Auswerteeinheit, die geringere Datenraten zu bewältigen hat. Die Auswerteeinheit kann somit aus kostengünstigeren Komponenten aufgebaut werden. Außerdem kann die Auswertung schneller erfolgen.

Alternativ oder zusätzlich kann eine Datenreduktion derart erfolgen, dass die Tiefenkamera der Auswerteeinheit jeweils nur die Unterschiede des jeweils aktuellen dreidimensionalen Bilds zu der Referenzkontur mitteilt. Dies bedeutet, dass lediglich Daten an die Auswerteeinheit übertragen werden, die beispielsweise von einem Objekt bzw. Hindernis stammen und damit von der Referenzkontur um einen vorbestimmten Schwellenwert abweichen.

Gemäß einer weiteren vorteilhaften Ausführungsform ist die Tiefenkamera ausgebildet, häufiger ein dreidimensionales Bild aufzunehmen, als der Abstandssensor den ersten Überwachungsbereich abtastet. Durch eine Erhöhung der Aufnahmerate wird ein schnelleres Ansprechverhalten auf Hindernisse erreicht. Zudem können von dem Abstandssensor erkannte Hindernisse schneller durch die zusätzlichen Daten der Tiefenkamera plausibilisiert werden.

Die Erfindung betrifft also ein Fahrzeug mit einem optischen Sensorsystem der vorstehend beschriebenen Art und einer Steuereinheit. Die Auswerteeinheit ist dabei ausgebildet, anhand der Abstandsinformationen Objekte zu erkennen, und bei Erkennung eines Objekts ein Warnsignal an die Steuereinheit auszugeben. Insbesondere kann das Fahrzeug auch ein selbstfahrendes Fahrzeug sein.

Für das Fahrzeug ist die Kombination aus Abstandssensor und Tiefenkamera auch insofern von Vorteil, dass z.B. oberhalb des ersten Überwachungsbereichs in den Fahrweg des Fahrzeugs ragende Hindernisse erkannt werden können. Beispielsweise kann die Tiefenkamera zur Erkennung derartiger Hindernisse auch parallel zu dem Abstandssensor ausgerichtet sein.

Die Steuereinheit kann dazu dienen, die Bewegung des Fahrzeugs zu steuern und das Fahrzeug zu lenken. Anhand des Warnsignals kann die Steuereinheit entscheiden, ob das Fahrzeug z.B. angehalten wird. Zusätzlich zu dem Warnsignal kann auch die Position des Objekts und dessen Größe an die Steuereinheit übermittelt werden, woraufhin die Steuereinheit die Bewegung des Fahrzeugs verändern und das Fahrzeug derart steuern kann, dass das Hindernis umfahren wird.

Erfindungsgemäß ist die Auswerteeinheit ausgebildet, die Referenzkontur an beschleunigungsabhängige Bewegungen des Fahrzeugs anzupassen. Die Referenzkontur kann automatisch also beispielsweise an eine Nickbewegung beim Beschleunigen oder Bremsen des Fahrzeugs angepasst werden. Dazu übermittelt die Steuereinheit der Auswerteeinheit aktuelle Beschleunigungswerte, aufgrund derer die Auswerteeinheit die Referenzkontur jeweils anpasst. Alternativ greift die Auswerteeinheit auch auf Messwerte eines Beschleunigungssensors zurück. Weiterhin kann auch eine Schräglage beim Durchfahren von Kurven oder beim Befahren von Steigungen berücksichtigt werden, die z.B. von einem Lagesensor ermittelt wird. Aufgrund der Anpassung der Referenzkontur kann ein unerwünschter Stopp des Fahrzeugs durch fälschlich bei einer Nickbewegung angenommene Hindernisse vermieden werden.

Bevorzugt kann der Abstandssensor Abstandsinformationen in einem Winkelbereich von 180° erfassen, wobei dieser Winkelbereich in der Fahrtrichtung des Fahrzeugs angeordnet ist. Der auf diese Weise gebildete Überwachungsbereich definiert somit eine ebene Fläche, die beispielsweise auf eine Größe von 3 x 3 m begrenzt sein kann.

Die von der Tiefenkamera erfassten dreidimensionalen Bilder bzw. Daten können alternativ auch ohne Verarbeitung an die Steuereinheit übertragen werden, um ein Einparken des Fahrzeugs oder ein Erkennen von Paletten und dergleichen zu ermöglichen. Auf diese Weise erweitert das Sensorsystem die Einsatzmöglichkeiten des selbstfahrenden Fahrzeugs.

Im Übrigen gelten für das erfindungsgemäße Fahrzeug die zu dem erfindungsgemäßen Sensorsystem getroffenen Aussagen, bezüglich Vorteilen und besonderer Ausführungsformen.

Weiterhin betrifft die Erfindung ein Verfahren zum Betrieb eines optischen Sensorsystems für ein Fahrzeug, bei welchem mit einem Abstandssensor, insbesondere mit einem Laserscanner, Abstandsinformationen für einen ersten Überwachungsbereich ermittelt werden, wobei der erste Überwachungsbereich eine ebene Fläche definiert, die bevorzugt parallel zu einem Untergrund verläuft, wobei eine Auswerteeinheit anhand der Abstandsinformationen Objekte erkennt und bei Erkennung eines Objekts ein Warnsignal an eine Steuereinheit ausgibt. Eine Tiefenkamera wird verwendet, um ein dreidimensionales Bild eines zweiten Überwachungsbereichs zu erzeugen. Die Auswerteeinheit empfängt und verarbeitet dreidimensionale Bilddaten der Tiefenkamera. Die Auswerteeinheit vergleicht die dreidimensionalen Bilder mit einer Referenzkontur und erkennt anhand des Vergleichs Objekte. Die Auswerteeinheit verwendet als Referenzkontur den Untergrund. Das erfindungsgemäße Verfahren zeichnet sich dadurch aus, dass die Steuereinheit der Auswerteeinheit aktuelle Beschleunigungswerte übermittelt, aufgrund derer die Auswerteeinheit die Referenzkontur an beschleunigungsabhängige Bewegungen des Fahrzeugs anpasst. Alternativ greift die Auswerteeinheit auf Messwerte eines Beschleunigungssensors zurück und passt anhand der Messwerte die Referenzkontur an beschleunigungsabhängige Bewegungen des Fahrzeugs an.

Ferner betrifft die Erfindung ein Verfahren zum Betrieb eines Fahrzeugs, bei welchem mit einem Abstandssensor, insbesondere mit einem Laserscanner, Abstandsinformationen für einen ersten Überwachungsbereich ermittelt werden, wobei der erste Überwachungsbereich eine ebene Fläche definiert, die bevorzugt parallel zu einem Untergrund verläuft, wobei eine Auswerteeinheit anhand der Abstandsinformationen Objekte erkennt und bei Erkennung eines Objekts ein Warnsignal an eine Steuereinheit ausgibt. Eine Tiefenkamera wird verwendet, um ein dreidimensionales Bild eines zweiten Überwachungsbereichs zu erzeugen. Die Auswerteeinheit empfängt und verarbeitet dreidimensionale Bilddaten der Tiefenkamera. Die Auswerteeinheit vergleicht die dreidimensionalen Bilder mit einer Referenzkontur und erkennt anhand des Vergleichs Objekte. Die Auswerteeinheit verwendet als Referenzkontur den Untergrund. Das erfindungsgemäße Verfahren zeichnet sich dadurch aus, dass die Steuereinheit der Auswerteeinheit aktuelle Beschleunigungswerte übermittelt, aufgrund derer die Auswerteeinheit die Referenzkontur an beschleunigungsabhängige Bewegungen des Fahrzeugs anpasst.

Alternativ greift die Auswerteeinheit auf Messwerte eines Beschleunigungssensors zurück und passt anhand der Messwerte die Referenzkontur an beschleunigungsabhängige Bewegungen des Fahrzeugs an.

Die unter Bezugnahme auf das erfindungsgemäße Fahrzeug und das erfindungsgemäße Sensorsystem getroffenen Aussagen gelten entsprechend für das erfindungsgemäße Verfahren.

Nachfolgend wird die Erfindung rein beispielhaft unter Bezugnahme auf die Zeichnungen beschrieben. Es zeigen:
- Fig. 1: ein erfindungsgemäßes Fahrzeug in schematischer Seitenansicht;
- Fig. 2: in schematischer Seitenansicht ein erfindungsgemäßes optisches Sensorsystem, welches an einer stationären Maschine befestigt ist;
- Fig. 3: eine schematische Draufsicht auf einen ersten und einen zweiten Überwachungsbereich; und
- Fig. 4: eine Helligkeitsverteilung in dem zweiten Überwachungsbereich.

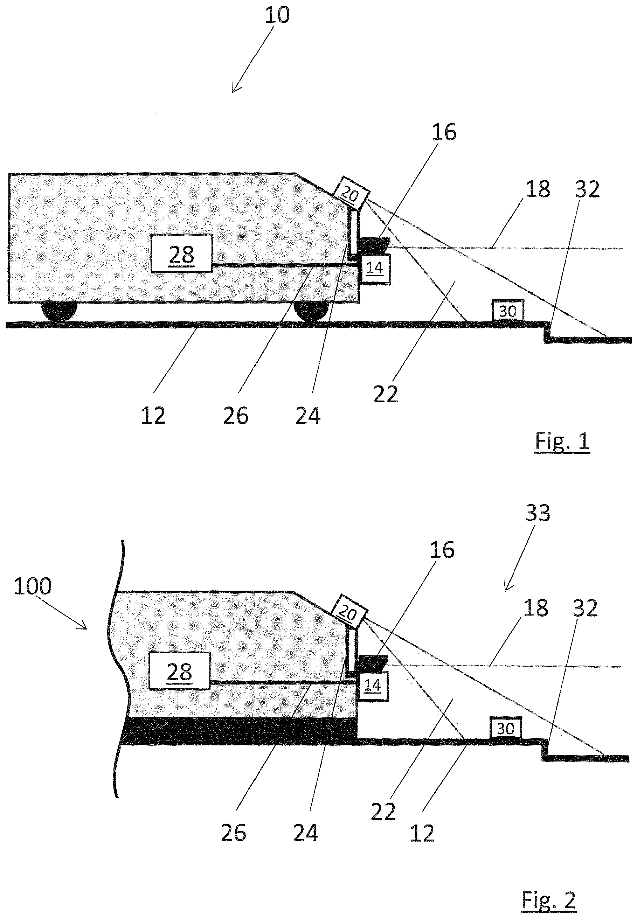

Fig. 1 zeigt ein selbstfahrendes Fahrzeug 10, welches sich auf einem Untergrund 12 bewegt. In Fahrtrichtung vorne ist an dem Fahrzeug 10 ein Laserscanner 14 mit einem rotierenden Scankopf 16 angebracht.

Von dem Scankopf 16 wird ein Laserstrahl 18 emittiert, der sich parallel zu dem Untergrund 12 ausbreitet. Trifft der Laserstrahl 18 auf ein Hindernis, wie z.B. das nachfolgend beschriebene Objekt 30, so wird der Laserstrahl 18 zum Laserscanner 14 reflektiert, wobei der Laserscanner 14 aus der Lichtlaufzeit einen Abstand zu dem Hindernis berechnet.

Beabstandet zu dem Laserscanner 14 ist oberhalb des Laserscanners eine Tiefenkamera, nämlich eine TOF-Kamera 20 angeordnet. Das Blickfeld der TOF-Kamera 20 ist auf den Untergrund 12 vordem Fahrzeug 10 gerichtet. Das Blickfeld 22 der Kamera schneidet somit die Ebene, in welcher der Laserstrahl 18 verläuft.

Die TOF-Kamera 20 besitzt bei diesem Ausführungsbeispiel eine Auflösung von 80 x 60 Pixeln und erzeugt eine Bildrate im Bereich von 50 Hz. Der Laserscanner 14 besitzt eine Scanfrequenz von 25 Hz. Die Bildrate der TOF-Kamera 20 ist somit doppelt so groß wie die Scanfrequenz des Laserscanners 14.

Die von der TOF-Kamera 20 erfassten dreidimensionalen Bilder werden mittels einer sicheren Datenverbindung 24 an den Laserscanner 14 übertragen. Der Laserscanner 14 verarbeitet mittels einer (nicht gezeigten) integrierten Recheneinrichtung, die als Auswerteeinheit dient, sowohl die dreidimensionalen Bilder der TOF-Kamera 20 als auch die von dem Laserscanner 14 ermittelten Abstandsinformationen. Erkennt die Recheneinrichtung des Laserscanners 14 ein Hindernis, so wird ein Warnsignal mittels einer zweiten sicheren Datenverbindung 26 an eine Steuereinheit 28 des Fahrzeugs 10 übermittelt. Die Steuereinheit 28 bremst dann das Fahrzeug 10 ab oder umfährt das Hindernis.

In Fig. 1 ist ein Objekt 30 dargestellt, welches auf dem Untergrund 12 vor dem Fahrzeug 10 liegt und sich im Blickfeld 22 der TOF-Kamera 20 befindet. Das Objekt 30 ist zu flach, um von dem Laserstrahl 18 des Laserscanners 14 erfasst zu werden.

Vom Fahrzeug 10 aus gesehen hinter dem Objekt 30 befindet sich bei dem gezeigten Beispiel eine Stufe 32, bei welcher der Untergrund 12 sprungartig abfällt. Auch die Stufe 32 wird nicht von dem Laserstrahl 18 des Laserscanners 14 erfasst, befindet sich aber im Blickfeld 22 der TOF-Kamera 20.

Der TOF-Kamera 20 ist durch Einprogrammieren eine Referenzkontur des Untergrunds 12 bekannt, die einem ebenen Untergrund entspricht, d.h. der Untergrund sollte kein Objekt 30 und keine Stufe 32 aufweisen. Bei der Erzeugung der dreidimensionalen Bilder erkennt die TOF-Kamera 20 im Bereich des Objekts 30 verkürzte Abstandswerte und im Bereich der Stufe 32 verlängerte Abstandswerte im Vergleich zu der eingespeicherten Referenzkontur. Die Unterschiedswerte zu der Referenzkontur werden von der TOF-Kamera 20 an die Recheneinrichtung des Laserscanners 14 übermittelt, woraufhin die Recheneinrichtung erkennt, dass vor dem Fahrzeug 10 ein Objekt auf dem Untergrund 12 angeordnet ist, hinter welchem eine Stufe 32 liegt. Das Objekt 30 kann potentiell eine Kollision und die Stufe 32 ein Abstürzen des Fahrzeugs 10 verursachen. Aus diesem Grund wird ein Warnsignal an die Steuereinheit 28 übermittelt. Die Steuereinheit 28 veranlasst daraufhin z.B. ein Ausweichen des Fahrzeugs 10.

In Fig. 2 ist eine stationäre Maschine, nämliche eine Presse 100, schematisch gezeigt. Vor der Presse 100 erstreckt sich ein Schutzraum 33, der von dem Laserscanner 14 und der TOF-Kamera 20 erfasst wird. Die Arbeitsweise des Laserscanners 14 und der TOF-Kamera 20 unterscheiden sich nicht von der unter Bezug auf Fig. 1 geschilderten Arbeitsweise. Die Ausführungen zu Fig. 1 treffen also auch auf Fig. 2 - mit den nachfolgend erläuterten Unterschieden - zu.

Im Gegensatz zu dem Fahrzeug 10 wird der Betrieb der Presse 100 angehalten, sobald ein Objekt 30, das sich im Schutzraum 33 befindet, erkannt wird. Auf diese Weise wird verhindert, dass das Objekt 30 oder Personen von der Presse 100 gefährdet werden.

Zudem wird die Stufe 32 - anders als bei dem Fahrzeug 10 - bei der Presse 100 nicht als Objekt oder Hindernis erkannt. Stattdessen befindet sich die Stufe 32 immer im gleichen Abstand zu der stationären Presse 100 und ist somit Teil der Referenzkontur.

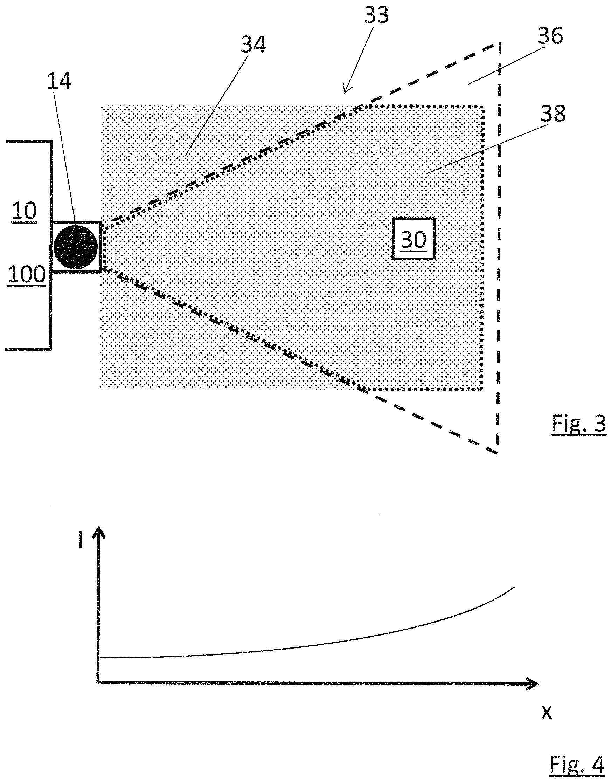

Fig. 3 zeigt den Bereich vor dem Fahrzeug 10 bzw. den Schutzraum 33 vor der Presse 100 in einer Ansicht von oben. Es ist ein rechteckiger erster Überwachungsbereich 34 dargestellt, der von der vom Laserstrahl 18 überstrichenen Fläche aufgespannt wird. Der Laserstrahl 18 geht über den ersten Überwachungsbereich 34 hinaus, jedoch werden nur Abstandsinformationen aus dem ersten Überwachungsbereich 34 bei der Ermittlung von Hindernissen herangezogen.

Die TOF-Kamera 20 weist einen Öffnungswinkel, d.h. ein Field of View, von etwa 30° auf, weshalb der von der TOF-Kamera 20 erfasste zweite Überwachungsbereich 36 in der Draufsicht im Wesentlichen dreieckförmig ist. Zur Datenreduktion werden von der TOF-Kamera 20 nur Bilddaten berücksichtigt, welche aus einem Überschneidungsbereich 38 des ersten Überwachungsbereichs 34 und des zweiten Überwachungsbereichs 36 stammen. In dem Überschneidungsbereich 38 liegt das Objekt 30, welches aufgrund der Daten der TOF-Kamera 20 als Hindernis (Fig. 1) bzw. als Teil der Referenzkontur (Fig. 2) erkannt wird. Die Stufe 32 ist in Fig. 3 nicht gezeigt.

Die TOF-Kamera 20 umfasst eine (nicht gezeigte) modulierte LED-Lichtquelle, welche den zweiten Überwachungsbereich 36 beleuchtet. Eine Beleuchtungsintensität I (in W/cm²) ist in Fig. 4 gegenüber dem Abstand x zu dem vorderen Ende des Fahrzeugs 10 angetragen. Die Beleuchtungsintensität I steigt dabei etwa quadratisch an, um im Wesentlichen eine gleiche Messgenauigkeit über den gesamten zweiten Überwachungsbereich 36 zu gewährleisten.

### Bezuqszeichenliste

- 10: Fahrzeug
- 12: Untergrund
- 14: Laserscanner
- 16: Scankopf
- 18: Laserstrahl
- 20: TOF-Kamera
- 22: Blickfeld
- 24: erste sichere Datenverbindung
- 26: zweite sichere Datenverbindung
- 28: Steuereinheit
- 30: Objekt
- 32: Stufe
- 33: Schutzraum
- 34: erster Überwachungsbereich
- 36: zweiter Überwachungsbereich
- 38: Überschneidungsbereich
- 100: Presse

## Patentansprüche

1. Fahrzeug (10) umfassend
eine Steuereinheit (28) und
ein optisches Sensorsystem mit
einem Abstandssensor (14), insbesondere einem Laserscanner, welcher Abstandsinformationen für einen ersten Überwachungsbereich (34) ermittelt, wobei der erste Überwachungsbereich (34) eine ebene Fläche definiert, die bevorzugt parallel zu einem Untergrund (12) verläuft, und
einer Auswerteeinheit, die ausgebildet ist, anhand der Abstandsinformationen Objekte (30, 32) zu erkennen, und bei Erkennung eines Objekts (30, 32) ein Warnsignal an die Steuereinheit (28) auszugeben,
wobei das Sensorsystem zusätzlich eine Tiefenkamera (20) umfasst, die ein dreidimensionales Bild eines zweiten Überwachungsbereichs (36) erzeugt,
wobei die Auswerteeinheit ausgebildet ist, dreidimensionale Bilddaten der Tiefenkamera (20) zu empfangen und zu verarbeiten,
wobei die Auswerteeinheit dazu ausgebildet ist, die dreidimensionalen Bilder mit einer Referenzkontur zu vergleichen und anhand des Vergleichs Objekte (30, 32) zu erkennen, und
wobei die Auswerteeinheit ausgebildet ist, den Untergrund (12) als Referenzkontur zu verwenden,
**dadurch gekennzeichnet, dass**
die Auswerteeinheit ausgebildet ist, die Referenzkontur an beschleunigungsabhängige Bewegungen des Fahrzeugs (10) anzupassen,
indem die Steuereinheit der Auswerteeinheit aktuelle Beschleunigungswerte übermittelt, aufgrund derer die Auswerteeinheit die Referenzkontur anpasst, oder
indem die Auswerteeinheit auf Messwerte eines Beschleunigungssensors zurückgreift und anhand derer die Referenzkontur anpasst.

2. Fahrzeug nach Anspruch 1,
**dadurch gekennzeichnet, dass**
die Auswerteeinheit eine Recheneinrichtung des Abstandssensors (14) ist.

3. Fahrzeug nach Anspruch 1 oder 2,
**dadurch gekennzeichnet, dass**
die Tiefenkamera (20) auf den Untergrund (12) ausgerichtet ist, wobei die Tiefenkamera (20) bevorzugt den Untergrund (12) unterhalb des ersten Überwachungsbereichs (34) zumindest bereichsweise erfasst.

4. Fahrzeug nach einem der vorstehenden Ansprüche,
**dadurch gekennzeichnet, dass**
der zweite Überwachungsbereich (36) mittels einer modulierten Lichtquelle beleuchtet ist.

5. Fahrzeug nach Anspruch 4,
**dadurch gekennzeichnet, dass**
die Lichtquelle ausgebildet ist, von der Tiefenkamera (20) weiter entfernte Bereiche des zweiten Überwachungsbereichs (36) mit höherer Beleuchtungsintensität (I) zu beleuchten.

6. Fahrzeug nach einem der vorstehenden Ansprüche,
**dadurch gekennzeichnet, dass**
die Tiefenkamera (20) ausgebildet ist, nur Daten des dreidimensionalen Bilds an die Auswerteeinheit zu übertragen, die aus dem Bereich des ersten Überwachungsbereichs (34) stammen.

7. Fahrzeug nach einem der vorstehenden Ansprüche,
**dadurch gekennzeichnet, dass**
die Tiefenkamera (20) ausgebildet ist, häufiger ein dreidimensionales Bild aufzunehmen, als der Abstandssensor (14) den ersten Überwachungsbereich (34) abtastet.

8. Fahrzeug (10) nach Anspruch 1,
**dadurch gekennzeichnet, dass**
das Fahrzeug (10) selbstfahrend ist.

9. Verfahren zum Betrieb eines optischen Sensorsystems für ein Fahrzeug (10), bei welchem
mit einem Abstandssensor (14), insbesondere mit einem Laserscanner, Abstandsinformationen für einen ersten Überwachungsbereich (34) ermittelt werden, wobei
der erste Überwachungsbereich (34) eine ebene Fläche definiert, die bevorzugt parallel zu einem Untergrund (12) verläuft,
wobei eine Auswerteeinheit anhand der Abstandsinformationen Objekte (30, 32) erkennt und bei Erkennung eines Objekts (30, 32) ein Warnsignal an eine Steuereinheit (28) ausgibt, wobei
zusätzlich eine Tiefenkamera (20) verwendet wird, um ein dreidimensionales Bild eines zweiten Überwachungsbereichs (36) zu erzeugen,
wobei die Auswerteeinheit dreidimensionale Bilddaten der Tiefenkamera (20) empfängt und verarbeitet,
wobei die Auswerteeinheit die dreidimensionalen Bilder mit einer Referenzkontur vergleicht und anhand des Vergleichs Objekte (30, 32) erkennt, und
wobei die Auswerteeinheit den Untergrund (12) als Referenzkontur verwendet,
**dadurch gekennzeichnet, dass**
die Steuereinheit der Auswerteeinheit aktuelle Beschleunigungswerte übermittelt, aufgrund derer die Auswerteeinheit die Referenzkontur an beschleunigungsabhängige Bewegungen des Fahrzeugs (10) anpasst,
oder die Auswerteeinheit auf Messwerte eines Beschleunigungssensors zurückgreift und anhand der Messwerte die Referenzkontur an beschleunigungsabhängige Bewegungen des Fahrzeugs (10) anpasst.

10. Verfahren zum Betrieb eines Fahrzeugs (10), insbesondere eines selbstfahrenden Fahrzeugs, bei welchem
mit einem Abstandssensor (14), insbesondere mit einem Laserscanner, Abstandsinformationen für einen ersten Überwachungsbereich (34) ermittelt werden, wobei
der erste Überwachungsbereich (34) eine ebene Fläche definiert, die bevorzugt parallel zu einem Untergrund (12) verläuft,
wobei eine Auswerteeinheit anhand der Abstandsinformationen Objekte (30, 32) erkennt und bei Erkennung eines Objekts (30, 32) ein Warnsignal an eine Steuereinheit (28) ausgibt, wobei
zusätzlich eine Tiefenkamera (20) verwendet wird, um ein dreidimensionales Bild eines zweiten Überwachungsbereichs (36) zu erzeugen,
wobei die Auswerteeinheit dreidimensionale Bilddaten der Tiefenkamera (20) empfängt und verarbeitet,
wobei die Auswerteeinheit die dreidimensionalen Bilder mit einer Referenzkontur vergleicht und anhand des Vergleichs Objekte (30, 32) erkennt, und
wobei die Auswerteeinheit den Untergrund (12) als Referenzkontur verwendet,
**dadurch gekennzeichnet, dass**
die Steuereinheit der Auswerteeinheit aktuelle Beschleunigungswerte übermittelt, aufgrund derer die Auswerteeinheit die Referenzkontur an beschleunigungsabhängige Bewegungen des Fahrzeugs (10) anpasst,
oder die Auswerteeinheit auf Messwerte eines Beschleunigungssensors zurückgreift und anhand der Messwerte die Referenzkontur an beschleunigungsabhängige Bewegungen des Fahrzeugs (10) anpasst.

## Claims

1. A vehicle (10) comprising
a control unit (28); and
an optical sensor system comprising
a distance sensor (14), in particular a laser scanner, which determines distance information for a first monitored zone (34), wherein the first monitored zone (34) defines a planar surface which preferably extends in parallel with a ground (12); and
an evaluation unit which is configured to recognize objects (30, 32) using the distance information and to output a warning signal to the control unit (28) on the recognition of an object (30, 32),
wherein the sensor system additionally comprises a depth camera (20) which produces a three-dimensional image of a second monitored zone (36);
wherein the evaluation unit is configured to receive and to process three-dimensional image data of the depth camera (20);
wherein the evaluation unit is configured to compare the three-dimensional images with a reference contour and to recognize objects (30, 32) with reference to the comparison; and
wherein the evaluation unit is configured to use the ground (12) as a reference contour,
**characterized in that**
the evaluation unit is configured to adapt the reference contour to movements of the vehicle (10) which are dependent on acceleration by the control unit transmitting current acceleration values to the evaluation unit on the basis of which the evaluation unit adapts the reference contour or
by the evaluation unit making use of measurement values of an acceleration sensor and adapting the reference contour on the basis of said measurement values.

2. A vehicle in accordance with claim 1,
**characterized in that**
the evaluation unit is a processing device of the distance sensor (14).

3. A vehicle in accordance with claim 1 or claim 2,
**characterized in that**
the depth camera (20) is aligned with the ground (12), with the depth camera (20) preferably at least regionally detecting the ground (12) beneath the first monitored zone (34).

4. A vehicle in accordance with any one of the preceding claims,
**characterized in that**
the second monitored zone (36) is illuminated by means of a modulated light source.

5. A vehicle in accordance with claim 4,
**characterized in that**
the light source is configured to illuminate regions of the second monitored zone (36), which are further remote from the depth camera (20), at a higher illumination intensity (I).

6. A vehicle in accordance with any one of the preceding claims,
**characterized in that**
the depth camera (20) is configured to only transmit data of the three-dimensional image to the evaluation unit which originate from the region of the first monitored zone (34).

7. A vehicle in accordance with any one of the preceding claims,
**characterized in that**
the depth camera (20) is configured to record a three-dimensional image more frequently than the distance sensor (14) scans the first monitored zone (34).

8. A vehicle (10) in accordance with claim 1,
**characterized in that**
the vehicle (10) is a self-driving vehicle.

9. A method of operating an optical sensor system for a vehicle (10) in which
distance information for a first monitored zone (34) is determined by a distance sensor (14), in particular by a laser scanner, wherein
the first monitored zone (34) defines a planar surface which preferably extends in parallel with a ground (12);
wherein an evaluation unit recognizes objects (30, 32) using the distance information and outputs a warning signal to a control unit (28) on the recognition of an object (30, 32);
wherein a depth camera (20) is additionally used to produce a three-dimensional image of a second monitored zone (36);
wherein the evaluation unit receives and processes three-dimensional image data of the depth camera (20);
wherein the evaluation unit compares the three-dimensional images with a reference contour and recognizes objects (30, 32) with reference to the comparison; and
wherein the evaluation unit uses the ground (12) as a reference contour,
**characterized in that**
the control unit transmits current acceleration values to the evaluation unit on the basis of which the evaluation unit adapts the reference contour to movements of the vehicle (10) which are dependent on acceleration;
or **in that** the evaluation unit makes use of measurement values of an acceleration sensor and adapts the reference contour to movements of the vehicle (10), which are dependent on acceleration, using the measurement values.

10. A method of operating a vehicle (10), in particular a self-driving vehicle, in which
distance information for a first monitored zone (34) is determined by a distance sensor (14), in particular by a laser scanner, wherein
the first monitored zone (34) defines a planar surface which preferably extends in parallel with a ground (12);
wherein an evaluation unit recognizes objects (30, 32) using the distance information and outputs a warning signal to a control unit (28) on the recognition of an object (30, 32);
wherein a depth camera (20) is additionally used to produce a three-dimensional image of a second monitored zone (36);
wherein the evaluation unit receives and processes three-dimensional image data of the depth camera (20);
wherein the evaluation unit compares the three-dimensional images with a reference contour and recognizes objects (30, 32) with reference to the comparison; and
wherein the evaluation unit uses the ground (12) as a reference contour,
**characterized in that**
the control unit transmits current acceleration values to the evaluation unit on the basis of which the evaluation unit adapts the reference contour to movements of the vehicle (10) which are dependent on acceleration;
or **in that** the evaluation unit makes use of measurement values of an acceleration sensor and adapts the reference contour to movements of the vehicle (10), which are dependent on acceleration, using the measurement values.

## Revendications

1. Véhicule (10), comportant
une unité de commande (28), et
un système de capteur optique comprenant
un capteur de distance (14), en particulier un scanneur laser, qui détecte des informations de distance pour une première zone à surveiller (34), la première zone à surveiller (34) définissant une surface plane qui s'étend de préférence parallèlement à un sol (12), et
une unité d'évaluation qui est réalisée pour reconnaître des objets (30, 32) en se basant sur les informations de distance, et pour émettre un signal d'alerte à l'unité de commande (28) lors de la reconnaissance d'un objet (30, 32),
dans lequel
le système de capteur comprend en supplément une caméra de profondeur (20) qui génère une image tridimensionnelle d'une seconde zone à surveiller (36),
l'unité d'évaluation est réalisée pour recevoir et traiter des données d'images tridimensionnelles de la caméra de profondeur (20),
l'unité d'évaluation est réalisée pour comparer les images tridimensionnelles à un contour de référence et pour reconnaître des objets (30, 32) en se basant sur la comparaison, et
l'unité d'évaluation est réalisée pour utiliser le sol (12) à titre de contour de référence,
**caractérisé en ce que**
l'unité d'évaluation est réalisée pour adapter le contour de référence à des mouvements du véhicule (10) dépendants de l'accélération,
du fait que l'unité de commande transmet à l'unité d'évaluation des valeurs d'accélération actuelles à base desquelles l'unité d'évaluation adapte le contour de référence, ou
du fait que l'unité d'évaluation a recours à des valeurs de mesure d'un capteur d'accélération et à base desquelles elle adapte le contour de référence.

2. Véhicule selon la revendication 1,
**caractérisé en ce que**
l'unité d'évaluation est un moyen de calcul du capteur de distance (14).

3. Véhicule selon la revendication 1 ou 2,
**caractérisé en ce que**
la caméra de profondeur (20) est orientée vers le sol (12), la caméra de profondeur (20) détectant de préférence au moins localement le sol (12) au-dessous de la première zone à surveiller (34).

4. Véhicule selon l'une des revendications précédentes,
**caractérisé en ce que**
la seconde zone à surveiller (36) est éclairée au moyen d'une source de lumière modulée.

5. Véhicule selon la revendication 4,
**caractérisé en ce que**
la source de lumière est réalisée pour éclairer avec une intensité d'éclairage (I) plus élevée des régions de la seconde zone à surveiller (36), qui sont plus éloignées de la caméra de profondeur (20).

6. Véhicule selon l'une des revendications précédentes,
**caractérisé en ce que**
la caméra de profondeur (20) est réalisée pour ne transmettre à l'unité d'évaluation que des données de l'image tridimensionnelle qui sont issues de la région de la première zone à surveiller (34).

7. Véhicule selon l'une des revendications précédentes,
**caractérisé en ce que**
la caméra de profondeur (20) est réalisée pour prendre une image tridimensionnelle plus souvent que le capteur de distance (14) ne balaie la première zone à surveiller (34).

8. Véhicule (10) selon la revendication 1,
**caractérisé en ce que**
le véhicule (10) est autopropulsé.

9. Procédé de fonctionnement d'un système de capteur optique pour un véhicule (10),
dans lequel
des informations de distance pour une première zone à surveiller (34) sont détectées par un capteur de distance (14), en particulier par un scanneur laser,
la première zone à surveiller (34) définit une surface plane qui s'étend de préférence parallèlement à un sol (12), et
une unité d'évaluation reconnaît des objets (30, 32) en se basant sur les informations de distance, et émet un signal d'alerte à une unité de commande (28) lors de la reconnaissance d'un objet (30, 32),
il est prévu en supplément une caméra de profondeur (20) pour générer une image tridimensionnelle d'une seconde zone à surveiller (36),
l'unité d'évaluation reçoit et traite des données d'images tridimensionnelles de la caméra de profondeur (20),
l'unité d'évaluation compare les images tridimensionnelles à un contour de référence et reconnaît des objets (30, 32) en se basant sur la comparaison, et
l'unité d'évaluation utilise le sol (12) à titre de contour de référence,
**caractérisé en ce que**
l'unité de commande transmet à l'unité d'évaluation des valeurs d'accélération actuelles à base desquelles l'unité d'évaluation adapte le contour de référence à des mouvements du véhicule (10) qui dépendent de l'accélération, ou
l'unité d'évaluation a recours à des valeurs de mesure d'un capteur d'accélération, et en se basant sur les valeurs de mesure, elle adapte le contour de référence à des mouvements du véhicule (10) qui dépendent de l'accélération.

10. Procédé de fonctionnement d'un véhicule (10), en particulier d'un véhicule autopropulsé,
dans lequel
des informations de distance pour une première zone à surveiller (34) sont détectées par un capteur de distance (14), en particulier par un scanneur laser,
la première zone à surveiller (34) définit une surface plane qui s'étend de préférence parallèlement à un sol (12), et
une unité d'évaluation reconnaît des objets (30, 32) en se basant sur les informations de distance, et émet un signal d'alerte à une unité de commande (28) lors de la reconnaissance d'un objet (30, 32),
il est prévu en supplément une caméra de profondeur (20) pour générer une image tridimensionnelle d'une seconde zone à surveiller (36),
l'unité d'évaluation reçoit et traite des données d'images tridimensionnelles de la caméra de profondeur (20),
l'unité d'évaluation compare les images tridimensionnelles à un contour de référence et reconnaît des objets (30, 32) en se basant sur la comparaison, et
l'unité d'évaluation utilise le sol (12) à titre de contour de référence,
**caractérisé en ce que**
l'unité de commande transmet à l'unité d'évaluation des valeurs d'accélération actuelles à base desquelles l'unité d'évaluation adapte le contour de référence à des mouvements du véhicule (10) qui dépendent de l'accélération, ou
l'unité d'évaluation a recours à des valeurs de mesure d'un capteur d'accélération, et en se basant sur les valeurs de mesure, elle adapte le contour de référence à des mouvements du véhicule (10) qui dépendent de l'accélération.
